# EUROPEAN PATENT APPLICATION

(11) **EP 3 153 338 A1**
(43) Date of publication of application: **12.04.2017**
(21) Application number: 16192910.4
(22) Date of filing: 07.10.2016
(51) Int. Cl.: B60J 7/10, F16B 5/06, F16B 2/12

(54) **A CONNECTION DEVICE FOR A CURTAIN SIDE**

(30) Priority: 08.10.2015 GB 201517836
(71) Applicant: Cunningham, Gordon, Maghera, Northern Ireland BT46 5DW (GB)
(72) Inventor: Cunningham, Gordon, Maghera, Northern Ireland BT46 5DW (GB)
(74) Representative: MacLachlan & Donaldson

(57) **Abstract**

The present invention provides a connection device for securing attachments, such as buckles and rollers, to a curtain side covering for a truck, trailer or other vehicle. The connection device comprises clamping means and fastening means together operable for releasably connecting the curtain side to attachments, such as buckles and rollers. The clamping means comprises two gripping plates, each having a gripping surface for securely engaging, without guillotining, the curtain side. Fastening means comprising a locking pin arrangement are operable to join the two gripping plates together and the locking pins extend through the curtain side fabric such that the inner facing surface and the outer facing surface of the curtain side are securely clamped between contoured projections and recesses when the two gripping plates are joined.

## Description

The present invention relates to a connection device for securing attachments, such as buckles and rollers, to a curtain side covering for a truck, trailer or other vehicle.

Tarpaulin type covers have many uses, and when adapted for covering the roof, front, back and sides of freight trucks and trailers are known as curtain sides, and in use, provide a housing or enclosure to prevent cargo from falling off the vehicle during transportation.

Attachments, such as buckles and rollers, fixed to the curtain side are used to fasten and secure the curtain side at a desired tension to the vehicle. In practice, these attachments are connected directly onto the curtain side using screws which are passed through the curtain side and which are then bolted. Straps from the attachment may be used to secure the curtain side to the vehicle.

However, the use of the above fixing method results in a weak connection being made between the attachment and curtain side and this effects the rating on the vertical strap pull, where tearing and ripping of the curtain side at the point of connection of the screw through the curtain side is common and highly problematic.

It is a therefore an object of the present invention to alleviate the above problems and/or which will provide the public and/or industry with a useful alternative.

According to the invention there is provided a connection device for securing attachments, such as buckles and rollers, to a curtain side covering for a truck, trailer or other vehicle, the curtain side comprising an inner facing surface and an outer facing surface, the connection device comprising:
clamping means and fastening means together operable for releasably connecting the curtain side to attachments, such as buckles and rollers;
the clamping means comprising:
two gripping plates, each having a gripping surface for engaging one of an inner facing surface and an outer facing surface of the curtain side, and
the fastening means comprising at least one locking pin extending between the gripping surfaces for releasably joining the two gripping plates together, in which the gripping surface of one of the gripping plates engages against the inner facing surface of the curtain side fabric and the gripping surface of the other of the gripping plates engages against the outer facing surface of the curtain side fabric,
each gripping surface comprises contoured projections and recesses in an offset arrangement such that the projections on the gripping surface of one of the gripping plates extends into the recesses on the gripping surface of the other gripping plates when the gripping plates are joined, and
the locking pin extends through the curtain side fabric such that the inner facing surface and the outer facing surface of the curtain side are securely clamped between the contoured projections and recesses when the two gripping plates are joined.

Preferably, the projections on the gripping surface are in the form of upright elongate teeth formations extending from the gripping plates.

Preferably, the teeth comprise a base and a head and taper inwardly from the base to the head thereof.

Preferably, the projections and recesses are arranged to provide the gripping plates with an undulating gripping surface.

Preferably, the at least one locking pin projects from one of the gripping plates for sliding engagement into and through a receiver aperture of the other of the gripping plates when the gripping plates are joined.

Preferably, the fastening means comprises two locking pins, in which the two locking pins are spaced apart and project from one of the gripping plates for sliding engagement into and through a pair of complimentary spaced receiver apertures provided in the other of the gripping plates when the gripping plates are joined.

Preferably, the fastening means comprises pressure applying means operable to set a clamping pressure of the gripping plates on the curtain side between the gripping surfaces.

Preferably, each locking pin has a screw threaded end portion for receiving a complimentarily threaded screw operable to set a clamping pressure of the gripping plates on the curtain side held between the gripping surfaces.

Preferably, the at least one locking pin projects upwardly from a backing plate fitted to one of the gripping plates.

Preferably, the backing plate is dimensioned to fit into a groove seat formed in a side of the gripping plate opposite the gripping surface side, and the at least one locking pin is arranged on the backing plate to extend though the receiver apertures formed in the gripping plate.

Alternatively, the at least one locking pin is integrally formed on the gripping plate.

Preferably, the locking pins are further adapted to extend through receiving apertures of an attachment, such as a buckle or roller, and the complimentarily threaded bolts secure the attachment via a gripping plate to provide attachment means for securing the attachment to the curtain side clamping means.

Preferably, one or both of the gripping plates comprises a hanger which extends upwardly from a side of the gripping plate in a direction parallel with the gripping surface of the gripping plate for engagement with a roller bobbin of a roller attachment.

The connection device of the present invention may be injection moulded from plastic or other polymer material, or they may be extruded using a metal material, such as aluminium, or a plastics material, or 3D printed.

Bolts, rings, hooks or other fixtures may be integrally formed on the gripping plates or connectable thereto. The connection device may also be integrally formed on an attachment, such as a buckle or roller.

The invention will be more clearly understood from the following description of some embodiments thereof, given by way of example only, with reference to the accompanying drawings, in which:
Fig. 1 is an exploded view of a connection device according to the invention;
Fig. 2 is the connection device shown in Fig. 1 in a joined configuration;
Fig. 3 are perspective views of gripping plates of the connection device shown in Fig. 1;
Fig. 4 is a plan view of a gripping plate according to another embodiment of the invention,
Fig. 5a is a side view showing the connection device of Fig. 1 secured to a curtain side and a roller attachment;
Fig. 5b is an exploded view showing the connection arrangement in Fig. 5a;
Fig. 5c is a side of the connection device with hanger for connection to a roller attachment;
Fig. 6a is an exploded view showing the connection device and an attachment buckle;
Figs. 6b is a side detailed view showing the connection device secured to a curtain side and a buckle attachment;
Figs. 7a and 7b show the connection device connected to inner and outer facing surfaces of a curtain side and to a buckle attachment for securing straps;
Figs. 8a to 8c show alternative attachment means for releasably connecting the curtain side clamping means to attachments, such as buckles and rollers, and
Fig. 9 is an exploded view of the connection device with a gripping plate according to an alternative embodiment of the invention;
Fig. 10 is a view of the connection device of Fig. 9 in a joined configuration;
Fig. 11 is a side view showing the connection device of Figs. 9 and 10 secured to a curtain side and a buckle attachment;
Fig. 12 is a side view showing the connection device of Figs. 9 and 10 secured to a curtain side and a roller attachment;
Fig. 13a to 13c show alternative attachment means for releasably connecting the curtain side clamping means of Figs. 9 and 10 to attachments, such as buckles and rollers, and
Fig. 14 are perspective views of gripping plates having gripping surfaces with various possible arrangements of protrusions and recesses according to alternative embodiments of the invention.

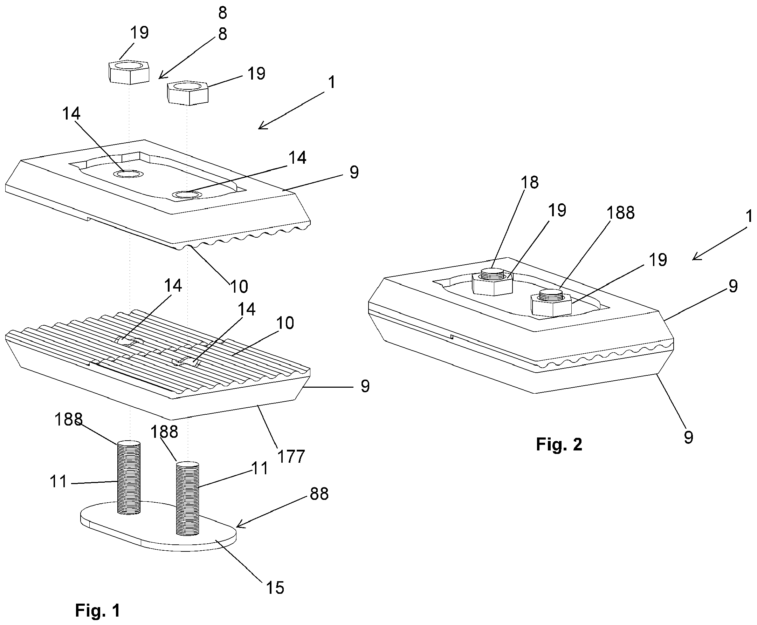

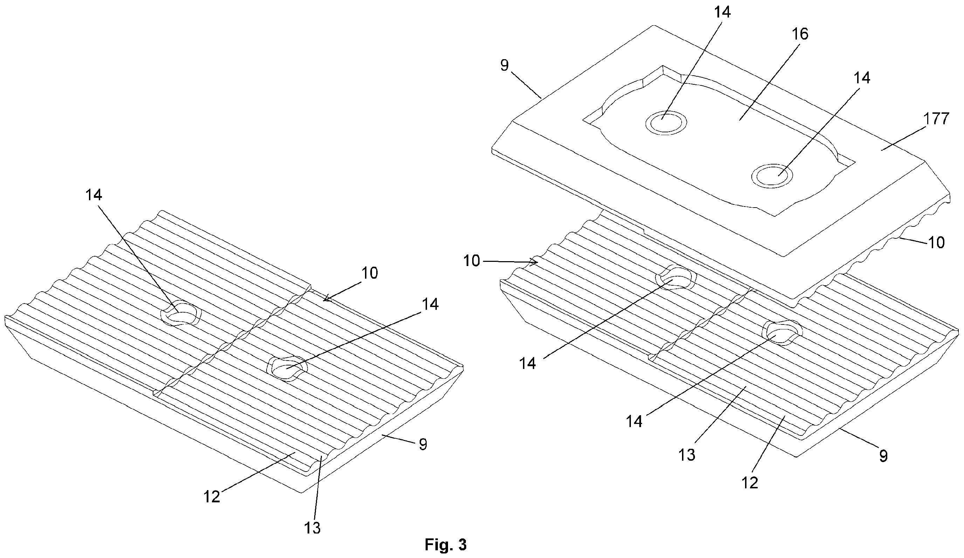

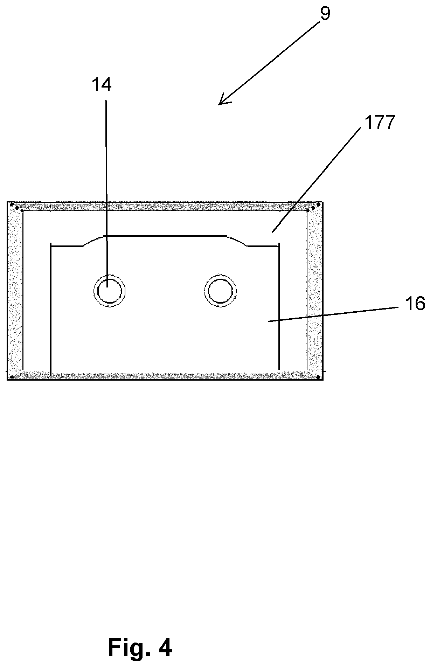

With reference to the drawings, and initially to Figs. 1 to 4, there is shown a connection device 1 for securing attachments, such as rollers 2 and/or buckles 3, to a curtain side 4 covering for a truck, trailer or other vehicle. The curtain side 4 would typically be a tarpaulin and comprises an inner facing surface 5, that is, a surface of the curtain side which faces inside the enclosure when fitted to a vehicle, and an outer facing surface 6, that is, a surface which faces outside the enclosure provided by the curtain side when fitted to a vehicle.

The connection device 1 comprises curtain side clamping means, indicated generally by the reference numeral 7, and fastening means, indicated generally by the reference numeral 8, for releasably connecting the curtain side 4 to the clamping means 7 and to the attachment 2, 3.

The curtain side clamping means 7 comprises two gripping plates 9 each having a side providing a gripping surface 10 for engaging a surface 5, 6 of the curtain side 4. The fastening means 8 comprises at least one locking pin 11 operable when engaged with the clamping means 7 to extend between the gripping surfaces 10 for releasably joining the two gripping plates 9 together, in which the gripping surface 10 of one of the gripping plates 9 engages against the inner facing surface 5 of the curtain side 4 and the gripping surface 10 of the other of the gripping plates 9 engages against the outer facing surface 6 of the curtain side 4.

Each gripping surface 10 of the gripping plates 9 comprises an arrangement of contoured projections 12 and recesses 13 in an offset configuration such that the projections 12 on the gripping surface 10 of one gripping plate 9 extend into or sit within the recesses 13 on the gripping surface 10 of the other gripping plate 9 when the gripping plates 9 are joined. In the instance shown, the projections 12 are in the form of upright elongate teeth formations spaced apart by recesses 13 extending from side edges of the gripping plates 9 and the contoured projections 12 and recesses 13 are arranged to provide the gripping plates with an undulating gripping surface for firmly gripping but not guillotining or otherwise damaging the curtain side fabric 4.

The fastening means 8 comprises at least one locking pin 11, and preferably two locking pins 11, in which the two locking pins 11 are spaced apart and project from the gripping surface 10 of one of the gripping plates 9 for sliding engagement into and through a pair of complimentary spaced receiver apertures 14 provided in the other of the gripping plates 10 when the gripping plates 10 are joined. Each locking pin 11 projects upwardly from a backing plate 15 dimensioned to fit into a groove seat 16 formed in a side 17 of the gripping plate 10 opposite the gripping surface side 10. It will be understood that when the backing plate 15 is positioned in the groove seat 16 the locking pins 11 extend through the receiver apertures 14 and upright from the gripping surface 10 of the gripping plate 9. Alternatively, each locking pin 11 may be integrally formed on the gripping plate 9 and extend upright on the gripping surface 10 thereof. Each locking pin 11 has a screw threaded bolt portion 18 for receiving a complimentarily threaded screw 19 operable to set a clamping pressure of the gripping plates 9 on the curtain side 4 held between the gripping surfaces 10.

Whilst the receiver apertures 14 are shown to be circular in shape these are preferably oval, e.g. approximately 6 mm wide and 8 mm long. However, these values should not be considered limiting and any suitable size or shape receiver aperture can be used.

The locking pins 11 are further adapted to extend through receiving apertures of a buckle attachment 6 such that threaded screws 19 are operable to secure the attachment 6 via the gripping plates 9 to the curtain side 4 to provide fastening means 8 for securing the attachment 6 and the curtain side together to the clamping means 7.

Accordingly, to the use the connection device 1, through holes are initially formed in the desired position on the curtain side 4. The backing plate 15 is then positioned in the groove seat 16 of a gripping plate 9 such that the locking pins 11 extend through the receiver apertures 14 thereof and project upright from the gripping surface 10 of the gripping plate 9. The locking pins 11 are then threaded through the holes formed in the curtain side 4 and the gripping surface 10 of the gripping plate 9 is brought to engage against the inner facing surface 5 of the curtain side 4.

The other of the two gripping plates 9 is then arranged such that the gripping surface 10 faces the outward facing surface 6 of the curtain side 4 and the receiver apertures 14 thereof are aligned to face the locking pins 11 now extending through the curtain side 4. The gripping plate 9 is then connected onto the locking pins 11 via the receiver apertures 14 and pushed such that the gripping surface 10 engages against the outer facing surface 6 of the curtain side 4 and the locking pins 11 extend fully through the gripping plate 9.

Bolts 19 are fixed to the screw threaded end 18 of each of the locking pins 11 to apply a clamping pressure such that the projections 12 on the gripping surface 10 of one gripping plate 9 extend into the recesses 13 on the gripping surface 10 of the other gripping plate 9 when the gripping plates 9 are joined. The bolts 19 may be tightened as required to apply an appropriate clamping pressure of the gripping plates 9 against the curtain side 4 held in between the gripping surfaces 10. It will be understood that a substantial portion and/or the entire surface area of the curtain side 4 held between the gripping surfaces 10 is clamped in between the projections 13 and recesses 12 by the connection device 1 on both sides of the curtain side 5, 6 thereby rendering a secure clamping hold of the curtain side 4.

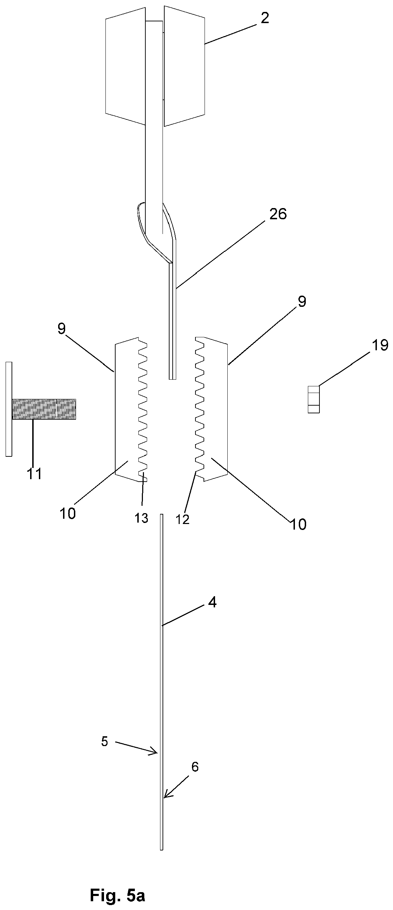

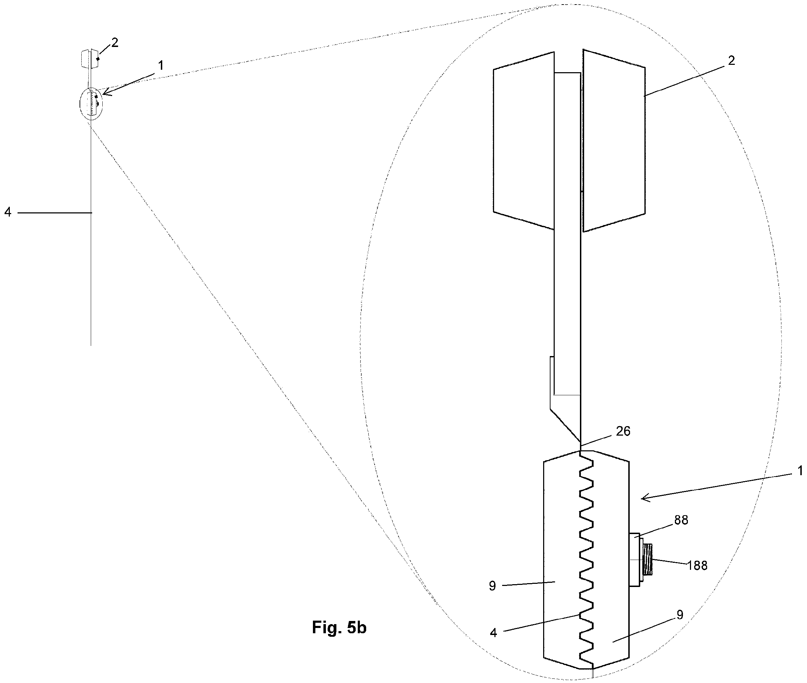

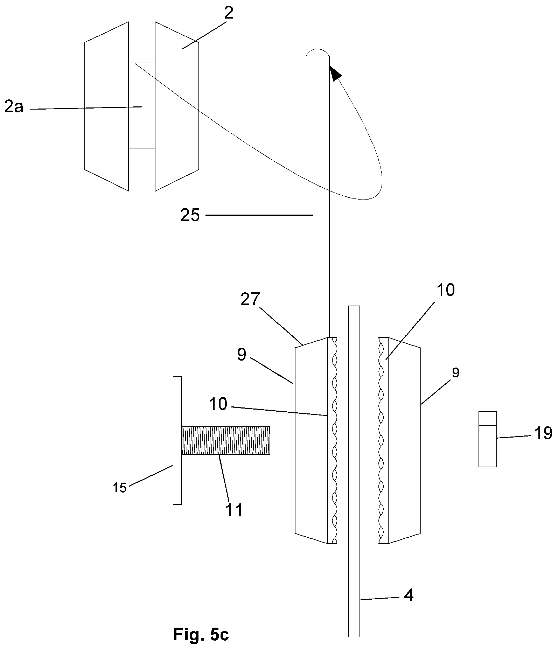

As shown in Figs. 5 to 7, the connection device 1 provides further means for connecting an attachment, such as a roller 2 or buckle 3, to the curtain side 4.

Figs. 5a to 5c show the connection device 1 being used to secure a curtain side 4 to a roller attachment 2. In the embodiment shown in Fig. 5a and 5b, the curtain side material 4 and a webbing material 26 of the roller attachment 2 is positioned between the gripping plates 9 of the connection device 1. The locking pins 11 are then threaded through apertures 14 and also in through holes formed in the curtain side 4. The gripping surfaces 10 of the gripping plates 9 are brought to engage against the curtain side 4 and bolts 19 are fixed to the screw threaded end 18 of each of the locking pins 11 to apply a clamping pressure such that the projections 12 on the gripping surface 10 of one gripping plate 9 extend into the recesses 13 on the gripping surface 10 of the other gripping plate 9 when the gripping plates 9 are joined. Bolts 19 may be tightened as required to apply an appropriate clamping pressure of the gripping plates 9 against the curtain side 4 held in between the gripping surfaces 10. In the embodiment shown the curtain side 4 and the webbing 25 are thus together clamped and retained by the connection device 1 to secure the curtain side to the roller attachment 1 in use. In the embodiment shown in Fig. 5c, one or both of the gripping plates 9 comprises a hanger 25 which extends upwardly from a side 27 of the gripping plate 9 in a direction parallel with the gripping surface 10 of the gripping plate 9 for engagement with a roller bobbin 2a of a roller attachment 2. The gripping plates 9 are secured to the curtain side material in the same way as described above with reference to Figs. 5a and 5b.

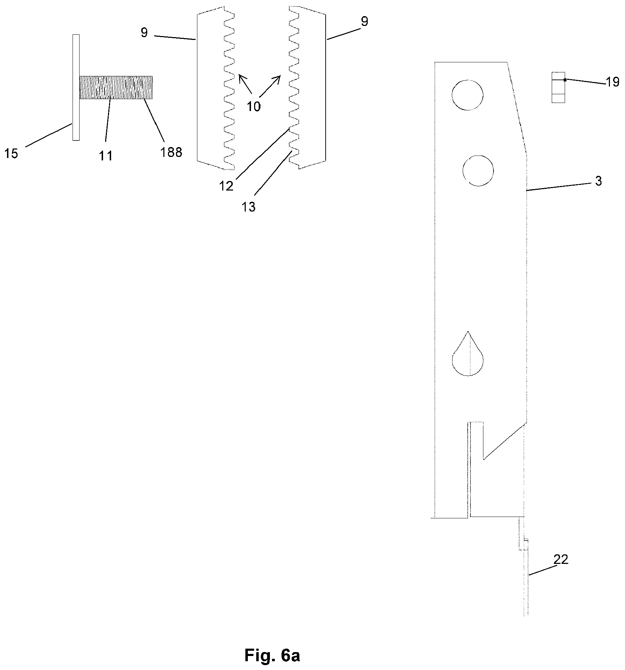

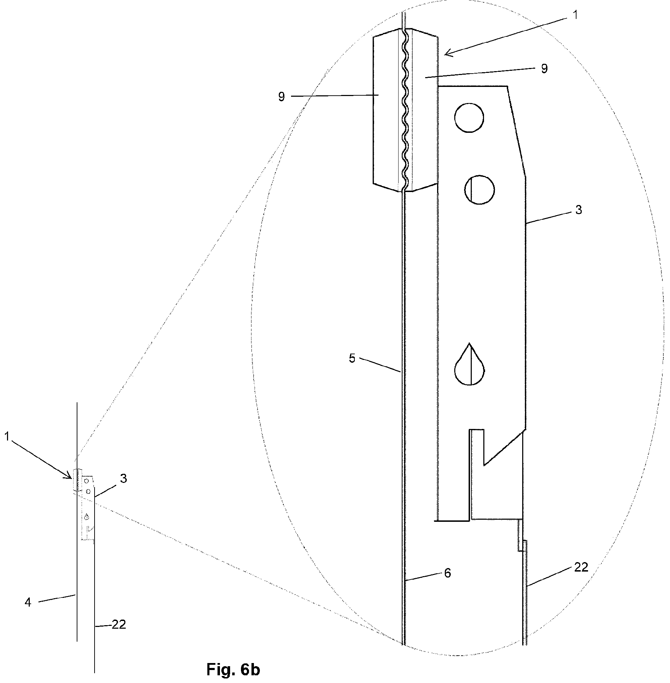

As shown in Fig. 6a and 6b, the locking pins 11 are further adapted to extend through receiving apertures of an attachment, such as a buckle 3, and the complimentarily threaded bolts 19 are screwed onto the screw threaded end 18 of the locking pins 11 and tightened to secure the attachment 3 via a gripping plate 9 to the connection device 1. It will be understood that the buckle 3 has load securing straps 20.

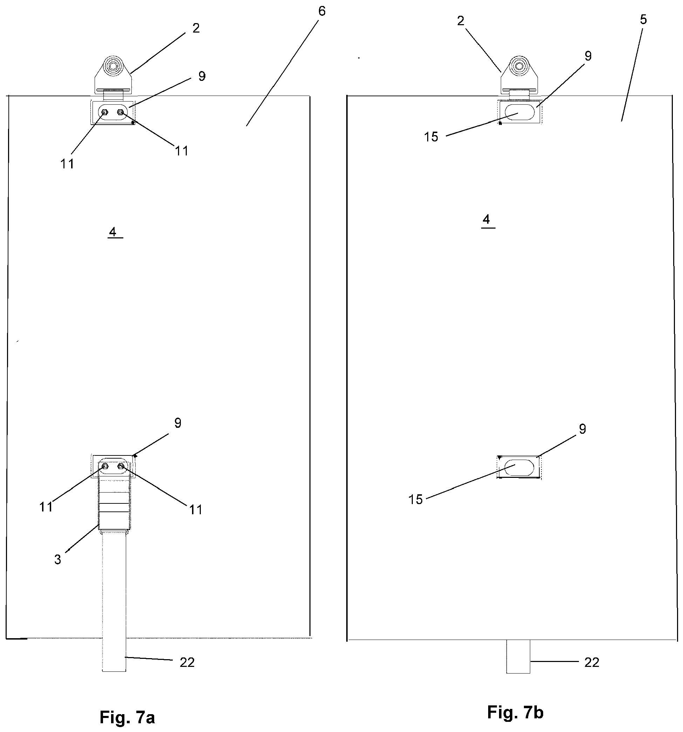

Fig. 7a shows the connection device 1 when secured to the outer facing surface 6 of a curtain side 4. Fig. 7b shows the appearance of the connection device 1 when secured to the inner facing surface 5 of a curtain side 4.

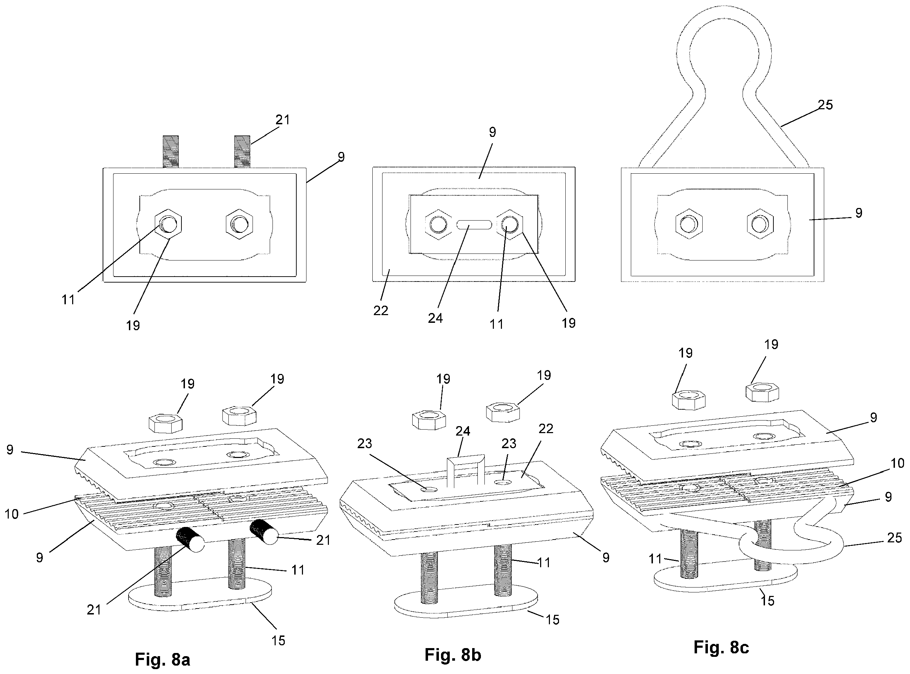

Figs. 8a to 8c show alternative attachment means for releasably connecting the connection device 1 to attachments, such as buckles and rollers. As shown in Fig. 8a, attachment bolts 21 may be integrally formed on a gripping plate 9 and extend perpendicularly therefrom. As shown in Fig. 8b, an attachment plate 22 with upstanding attachment hook 24 and receiving apertures 23 for the locking pins 11 is provided. As shown in Fig. 8c, which corresponds to the embodiment of Fig. 5c, an attachment hanger 25 may be integrally formed on a gripping plate 9 and extend perpendicularly therefrom for attachment to a roller bobbin of a roller attachment 2.

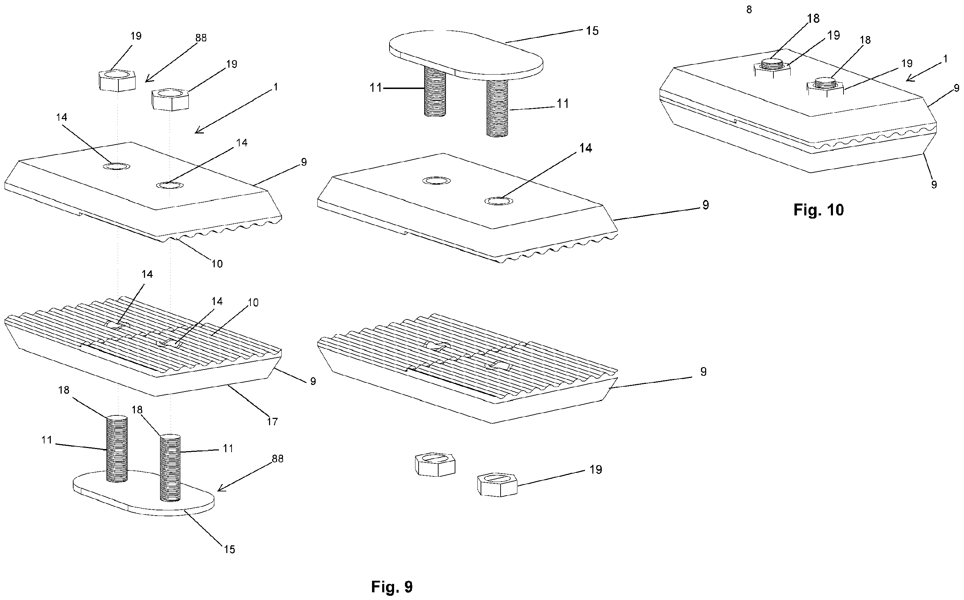

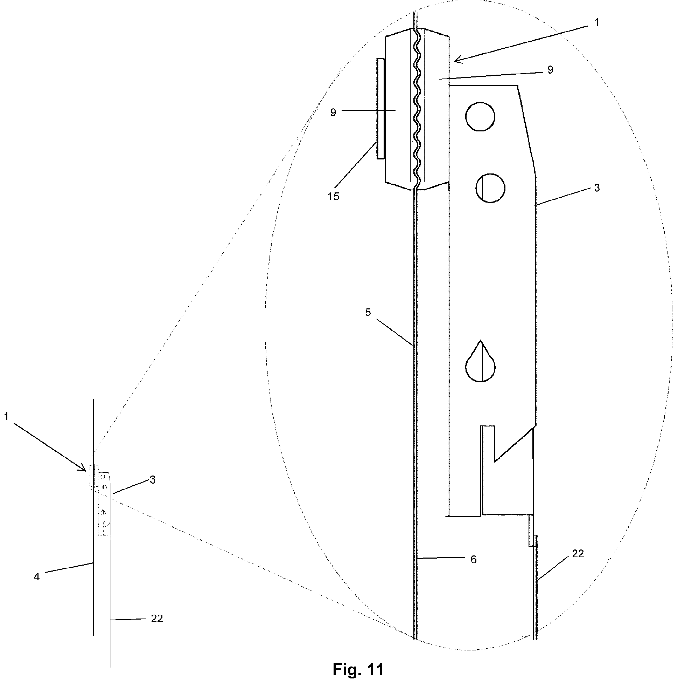

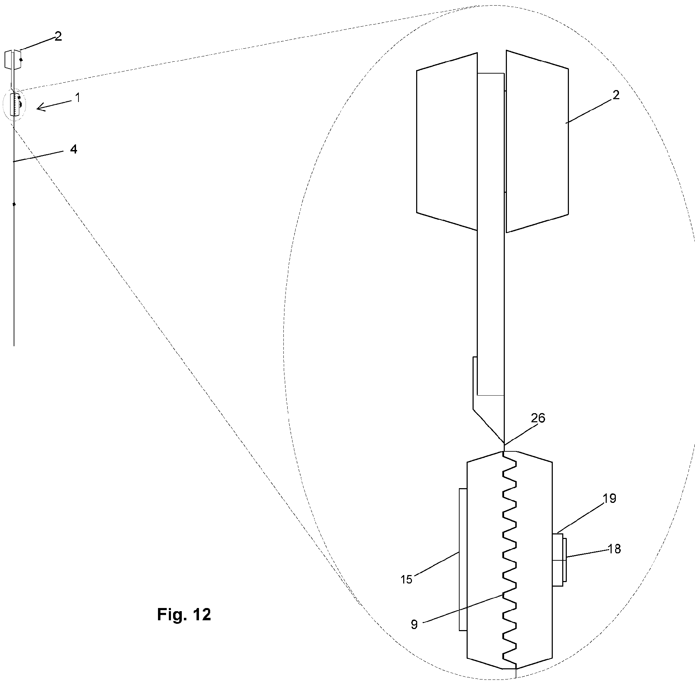

Figs. 9 to 12 show a configuration for gripping plates 9 according to the invention in which a groove seat is not provided in the side face thereof. Accordingly, in such an embodiment, when the two gripping plates 9 are joined as shown, a portion of the backing plate 15 extends from the gripping plate 9 when the locking pins 11 are passed through the apertures 14 of the gripping plates 9 and secured to the curtain side 4 by screws 19.

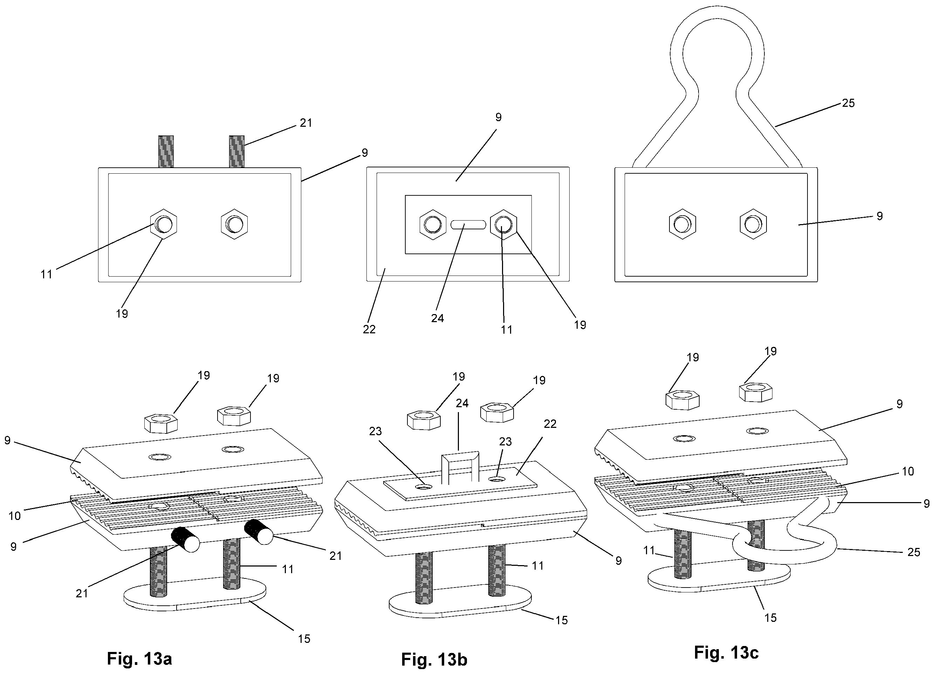

Figs. 13a to 13c show alternative attachment means for releasably connecting the connection device of Fig. 9 to attachments, such as buckles and rollers. As shown in Fig. 13a, attachment bolts 21 may be integrally formed on a gripping plate 9 and extend perpendicularly therefrom. As shown in Fig. 13b, an attachment plate 22 with upstanding attachment hook 24 and receiving apertures 23 for the locking pins 11 is provided. As shown in Fig. 13c, which corresponds to the embodiment of Fig. 5c, an attachment hanger 25 may be integrally formed on a gripping plate 9 and extend perpendicularly therefrom for attachment to a roller bobbin of a roller attachment 2.

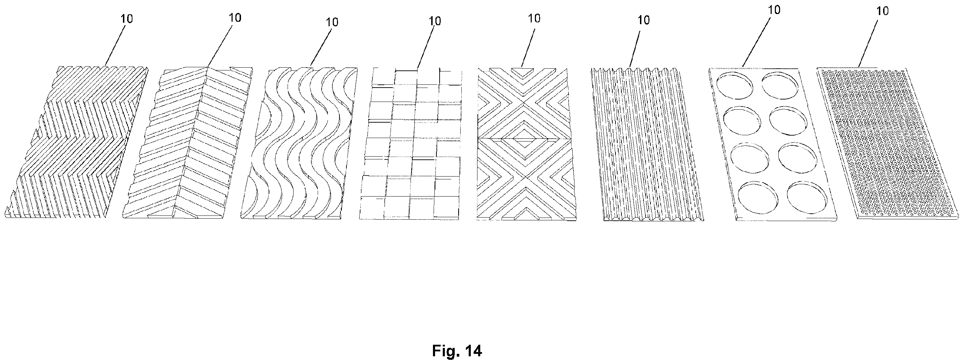

Other configurations for a gripping surface 10 according to the invention and operable to grip but not to guillotine the side surfaces 5, 6 of the curtain side 4 when clamping are envisaged for the gripping plates 9, and are shown in Fig. 14.

It is to be understood that the invention is not limited to the specific details described herein which are given by way of example only and that various modifications and alternations are possible without departing from the scope of the invention as defined in the appended claims.

## Claims

1. A connection device for securing attachments, such as buckles and rollers, to a curtain side covering for a truck, trailer or other vehicle, the curtain side comprising an inner facing surface and an outer facing surface, and the connection device comprising:
clamping means and fastening means together operable for releasably connecting the curtain side to attachments, such as buckles and rollers;
the clamping means comprising:
two gripping plates, each having a gripping surface for engaging one of an inner facing surface and an outer facing surface of the curtain side, and
the fastening means comprising at least one locking pin extending between the gripping surfaces for releasably joining the two gripping plates together, in which the gripping surface of one of the gripping plates engages against the inner facing surface of the curtain side fabric and the gripping surface of the other of the gripping plates engages against the outer facing surface of the curtain side fabric,
each gripping surface comprises contoured projections and recesses in an offset arrangement such that the projections on the gripping surface of one of the gripping plates extends into the recesses on the gripping surface of the other gripping plates when the gripping plates are joined, and
the locking pin extends through the curtain side fabric such that the inner facing surface and the outer facing surface of the curtain side are securely clamped between the contoured projections and recesses when the two gripping plates are joined.

2. A connection device as claimed in Claim 1, in which the or each locking pin is further adapted to extend through receiving apertures of an attachment, such as a buckle or roller, and the fastening means is operable to secure the attachment via a gripping plate to the clamping means.

3. A connection device as claimed in Claim 1 or Claim 2, in which the at least one locking pin projects from one of the gripping plates for sliding engagement into and through a receiver aperture of the other of the gripping plates when the gripping plates are joined.

4. A connection device as claimed in any one of the preceding claims, in which the fastening means comprises two locking pins, in which the two locking pins are spaced apart and project from one of the gripping plates for sliding engagement into and through a pair of complimentary spaced receiver apertures provided in the other of the gripping plates when the gripping plates are joined.

5. A connection device as claimed in any one of the preceding claims, in which the fastening means comprises pressure applying means operable to set a clamping pressure of the gripping plates on the curtain side between the gripping surfaces thereof.

6. A connection device as claimed in any one of the preceding claims, in which each locking pin has a screw threaded end portion for receiving a complimentarily threaded screw operable to set a clamping pressure of the gripping plates on the curtain side held between the gripping surfaces thereof.

7. A connection device as claimed in any one of the preceding claims, in which the at least one locking pin projects upwardly from a backing plate fitted to one of the gripping plates.

8. A connection device as claimed in Claim 7, in which the backing plate is dimensioned to fit into a groove seat formed in a side of the gripping plate opposite the gripping surface, and the at least one locking pin is arranged on the backing plate to extend though the receiver apertures formed in the gripping plate.

9. A connection device as claimed in any one of Claims 1 to 7, in which the at least one locking pin is integrally formed on the gripping plate and projects from a gripping surface thereof.

10. A connection device as claimed in any one of the preceding claims, in which one or both of the gripping plates comprises a hanger which extends upwardly from a side of the gripping plate in a direction parallel with the gripping surface of the gripping plate for engagement with a roller bobbin of a roller attachment.

11. A connection device as claimed in any one of the preceding claims, in which, the projections on the gripping surface are in the form of upright elongate teeth formations extending from the gripping plates.

12. A connection device as claimed in Claim 11, in which the teeth comprise a base and a head and taper inwardly from the base to the head thereof.

13. A connection device as claimed in any one of the preceding claims, in which the projections and recesses are arranged to provide the gripping plates with an undulating gripping surface.

14. An attachment, such as a buckle or a roller, for securing a curtain side material to a vehicle, comprising a connection device as claimed in any one the preceding claims.

15. An attachment as claimed in Claim 14, in which the connection device is integrally formed to the attachment.
